# EUROPEAN PATENT SPECIFICATION

(11) **EP 3 865 331 B1**
(45) Date of publication and mention of the grant of the patent: **21.12.2022**
(21) Application number: 21156466.1
(22) Date of filing: 11.02.2021
(51) Int. Cl.: B60K 16/00, E02F 9/16

(54) **WORK VEHICLE PROVIDED WITH AN IMPROVED SOLAR PANEL ASSEMBLY**
ARBEITSFAHRZEUG MIT EINER VERBESSERTEN SOLARPANELANORDNUNG
VÉHICULE DE TRAVAIL DOTÉ D'UN ENSEMBLE PANNEAUX SOLAIRES AMÉLIORÉ

(30) Priority: 11.02.2020 IT 202000002671
(43) Date of publication of application: 18.08.2021
(73) Proprietor: CNH Industrial Italia S.p.A., 10135 Torino (IT)
(72) Inventor: Dato, Mario Alessio, 10148 Turin (TO) (IT); Pinto, Massimo, 10023 Chieri (TO) (IT); Mirti, Francesco, 10078 Venaria Reale (TO) (IT)
(74) Representative: CNH Industrial IP Department

(56) References cited:
- EP-A1- 1 728 689
- DE-A1-102009 052 105
- DE-T5-112012 003 460
- US-A1- 2016 168 824

## Description

### TECHNICAL FIELD

The present invention concerns a work vehicle, in particular a work vehicle provided with a solar panel assembly for generating electrical energy that can be used for, at least partially, the operation of the work vehicle.

### BACKGROUND OF THE INVENTION

Vehicles tends to be more and more efficient from an environmental point of view. Accordingly, solar panels are widely used to provide electrical energy to feed, at least partially, the energetic needs of a vehicle.

For sake of example, such electrical energy may also be used to feed the vehicle without using the electrical energy of the batteries of the vehicle when the engine is switched off or to maintain such batteries always charged.

Such solar panels are usually arranged on a top portion, e.g. the roof, of a vehicle and are designed to resist to impacts of objects that may fall on them as shown in EP1728689A1, e.g. hail. For sake of example, normally used solar panels are designed to resist to an impact of a walnut dimension hail.

Also work vehicle could be provided with solar panels to reach the above advantages, however, due to the particular working conditions, there are still some problems to be addressed.

First, work vehicles may be subjected to the fall on the roof of potentially very heavy objects, such as stones or sharp objects. A solution to such problem can be foreseen by providing a protective element configured to cover and avoid the collision of objects on the solar panel. However, it is clear that such protective element would decrease the quantity of the solar light directed to the solar panel, lowering its potentiality.

Furthermore, the dirty environment into which the work vehicles are operated leads dust to overlay all the external surface of a work vehicle and, in case a solar panel is present, of the solar panel; when such dust exceeds a limit it filters the solar light thereby lowering the potentiality of the solar panel. Accordingly, the user of such work vehicle should frequently jump on vehicle's body to reach the top of the roof to clean the surface of the solar panel. However, it is clear that such cleaning operation is a waste of time and may lead to potential incidents such as A fall of the operator.

Therefore, the need is felt to provide a solar panel assembly suitable for being used in a work vehicle in an easy, continuous and safe manner.

An aim of the present invention is to satisfy the above mentioned needs in an optimized and economic manner.

### SUMMARY OF THE INVENTION

The aforementioned aim is reached by a work vehicle comprising a solar panel assembly as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view illustrating a cab of a work vehicle provided with a solar panel assembly according to the invention in a first operative condition;
- Figure 2 is a perspective view illustrating a cab of a work vehicle provided with a solar panel assembly according to the invention in a second operative condition;
- Figure 3 is a perspective view of the solar panel assembly for cab of a work vehicle of the present invention, with parts removed for sake of clarity;
- Figure 4 is a transversal sectional view of the cab provided with the solar panel assembly of figure 1;
- Figures 5 and 6 are perspective views of portions of the solar panel assembly for cab of a work vehicle of the present invention, with parts removed for sake of clarity.

### DETAILED DESCRIPTION OF THE INVENTION

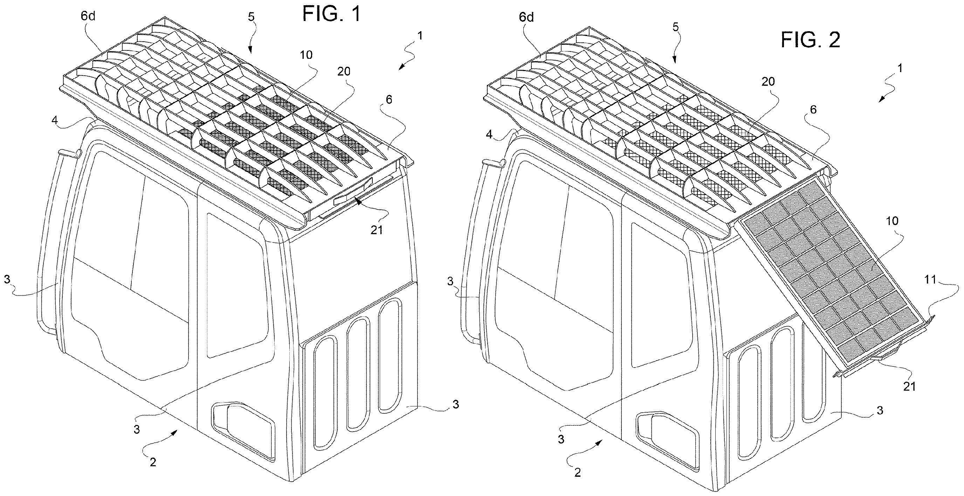

Figures 1 and 2 describe a portion of a work vehicle 1 (not shown in its entirety for sake of economy) provided with a cab 2 defined by a plurality of walls 3 defining an inner volume into which a seat and a control deck for a driver of the work vehicle can be arranged.

In particular, cab 2 comprises a roof 4, i.e. one among the walls 3 defining the inner volume of the cab 2, configured to limit vertically the space of such volume above the seat of the driver.

Work vehicle 1 is provided with a solar panel assembly 5 according to the invention and, according to the described embodiment, carried by the cab 2 of the work vehicle 1 and, in particular, arranged on the roof 4.

In the following, the description of the solar panel assembly 5 will be referred to the roof 4 of a cabin 2, however it is clear that any suitable wall 3 of any part of a work vehicle may be used instead of the roof 4, as described.

According to the present invention and as clearly shown in figures 1, to 4, solar panel assembly 5 comprises a support structure 6 configured to be fixed to the roof 4 and to define a housing space 7 together with this latter as defined in detail in the following.

In particular, the support structure 6 has a C-shaped transversal cross-section comprising a pair of lateral flanges 6a extending parallel to roof 4, a pair of vertical plates 6b extending from inner edges of lateral flanges 6a on opposite side with respect to roof 4 and a central portion 6c extending between the vertical plates 6b.

Preferably, the lateral flanges 6a, the central portion 6c and the vertical plates 6b are realized as one-piece element more preferably realized in metal and the lateral flanges 6a can be provided with connection means 8 in order to be fixed on the roof 4 of the cabin 2.

Support structure 6 preferably extends over at least part of the roof 4 and, according to the present embodiment, extends above all the roof 4. Therefore, according the above defined cross-section the lateral flanges 6a, the vertical plates 6b and the central portions 6c extends along the roof 4 between a front edge and a rear edge of this latter.

Furthermore, the support structure is opened in proximity of the the rear edge of the roof, so that according to the above defined structure, the housing space 7 is delimited vertically between the roof 4 and the central portion 6c of the support structure 6 and laterally by vertical plates 6b of the latter while it is opened rearwards with respect to cab 2. Accordingly, the housing space is accessible from the rear edge of the roof 4.

Preferably, the front edge of roof 4 is closed by a further plate element 6d, making part of structure 6, and configured to be connected to vertical plates 6b.

Advantageously, the central portion 6c is provided with a plurality of openings configured to allow the passage of solar light towards the roof 4.

Advantageously, the support structure 6 can be a FOPS (Falling Object Protective Structure), as per se known and provide in its central portion 6c an impact support grid defining a plurality of openings of preset sized to avoid the direct collision of heavy/bulky objects such as stones on the roof. However, according to the present invention, such FOPS is configured to be lifted up with respect to the roof 4 thanks to vertical plates 6b which distance the support grind with respect to lateral plates 6a, differently from known FOPS into which the support grid is likely in contact/proximity of the roof 4.

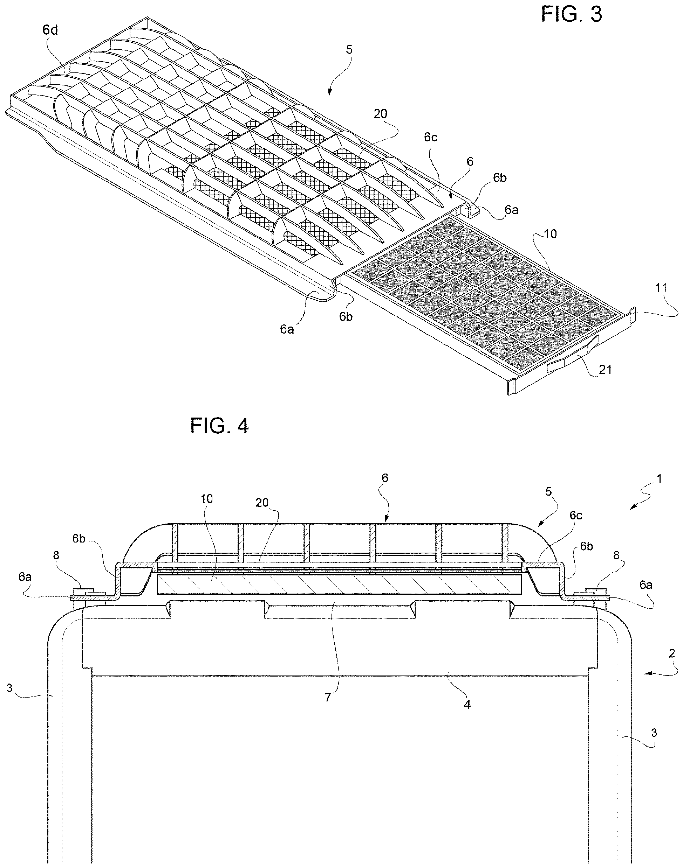

Always according to the present invention, the solar panel assembly 5 comprises a solar panel 10 arranged in the housing space 7 in a movable manner so as to assume a first, closed, configuration into which it is completely arranged in the housing space 7 so that it is protected by falling objects by the central portion 6c of the support structure 6 (as shown in figure 1) and a second, opened, configuration into which it is, at least partially and preferably totally, extracted with respect to the housing space 7 (as shown in figures 2 and 3) .

In particular, the solar panel 10 is carried by the support structure 6 in a sliding manner so as to be selectively extracted with respect to housing space 7. Furthermore, solar panel 10 can advantageously be rotated with respect to support structure 6, when totally extracted with respect to housing space 7, so as to allow its positioning into a configuration which allows an easier cleaning of its external surface.

According to the defined embodiment, as can be better appreciated in figures 4, 5 and 6, solar panel 10 is housed in a case 11 carried by support structure 6 as defined below. In particular, work vehicle 1 comprises sliding means 12 realized between support structure 6 and case 11 to allow the sliding of this latter in the support structure 6.

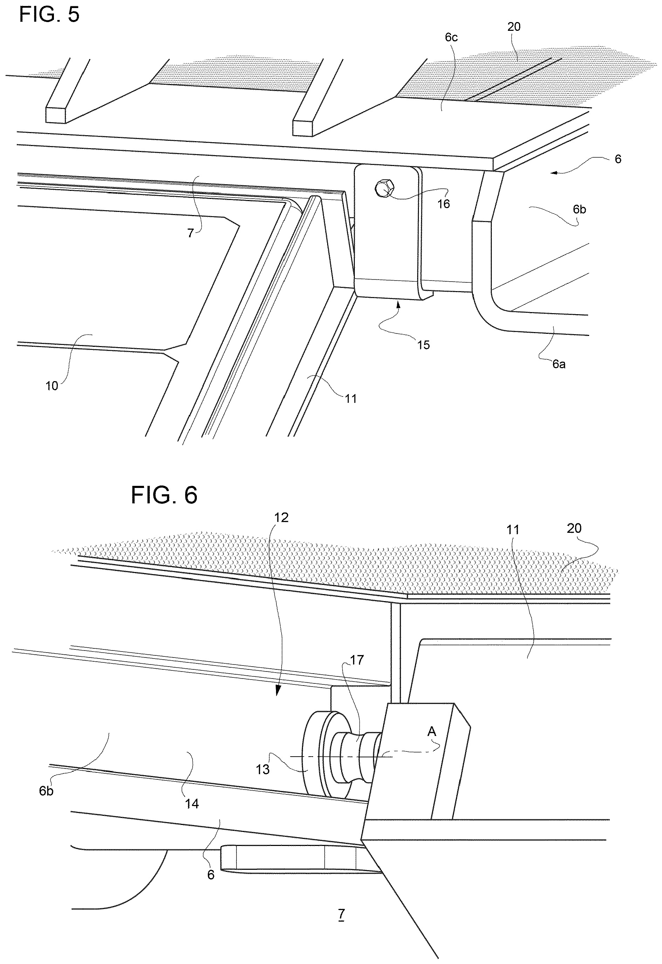

As it can be better appreciated in figures 5 and 6, such sliding means 12 may comprise a roller 13 carried by case 11 and configured to move within a seat 14 realized in the support structure 6. According to the described embodiment, such seat 14 can be preferably realized in the vertical plates 6b of the support structure 6 so that a right and a left seats 14 can be envisaged to allow an equilibrated guide to the sliding of the case 11 with respect to support structure 6. The roller 13 is advantageously carried in a rear portion of the cage 11, i.e. in proximity to an edge which is, in the first, closed, configuration of solar panel assembly 5, in proximity to front edge of the roof 4.

According to the above arrangement, the roller 13 can move from a first end position positioned along the seat 14 of support structure 6 in proximity to the front edge of the roof and a second end position positioned along the along the seat 14 of support structure 6 in proximity of the rear edge of the roof. Consequently, the cage 11 can move between the above defined first and second configurations.

First end second end positions may be realized thanks to stop means interposed in the seats 14 and configured to cooperate at contact with roller 13 to interrupt its motion. Preferably the stop means comprise impact plates 15 carried by support structure 6 so as to be interposed within seat 14 and configured to define an impact surface to roller 13 which avoid its further motion in the seat 14.

Furthermore, as in the present embodiment, stop means, i.e. impact plates 15 can be selectively removable with respect to such structure thanks to coupling means 16, e.g. threaded means. Such selectively fixation to the support structure 6 allows to substitute the cage 11, i.e. the solar panel 10, when needed.

As above anticipated, the solar panel assembly 5 comprises rotation means configured to allow the rotation of the solar panel 10 with respect to support structure 6, in its extracted configuration.

According to the present embodiment, roller 13 is carried by cage 11 in a rotatable free manner with respect to a support hub 17 carried by cage 11 and extending from a lateral edge of this latter about an axis A parallel to the surface of the roof 4. Accordingly, cage 11 can be inserted into housing space 7 without contact with support structure 6.

Then, according to the present embodiment such rotation means are integrated into the support hub 17 that is itself carried in a rotatably free manner by cage 11, e.g. it is inserted into a hole (not shown) provided with a bushing (not shown) configured to allow a possible relative rotation of the cage 11 with respect to support hub 17. In view of the above, the cage 11, in the second configuration, i.e. when totally extracted from housing space 7, can be rotated about support hub 17 axis A thereby allowing an inclined (or vertical, if needed) positioning with respect to the roof 4, as shown in figure 2.

Always according to the present invention, the solar panel assembly 5 comprises a protective net 20 arranged in the housing space 7 and interposed between the support structure 6 and the solar panel 10 so as to avoid the fall of object which could pass through the support structure 6.

In particular, the protective net 20 can be carried by support structure 6 beneath its central portion 6c, preferably parallel to this latter, and distanced both with respect the central portion 6c of the support structure 6 and the solar panel 10. The protective net 20 is configured to define a plurality of openings which are smaller with respect to the ones of the central portion 6c. Such openings re dimensioned so that they can avoid to stop the fall of objects which dimension could be dangerous when impacting on the solar panel 10. In particular, the net 20 can be realized in metal material.

According to the present embodiment, the protective net 20 is rigidly carried by the vertical plates 6b of the support structure 6 just above the seats 14 into which roller 13 may slide. Furthermore, the protective net 20 extends beneath just a portion, in particular the rear portion, of the central portion 6c.

The solar panel assembly 5 may further comprises locking means (not shown) for selectively locking the cage 11 with respect to the support structure 6 (or the roof 4) to avoid the passage of this latter during the operation of the work vehicle. Such locking means may e.g. comprise a pin configured to be placed into respective holes realized in the cage and in the support structure 6 (or roof 4) to securing the two elements together.

Furthermore, the solar panel assembly can comprise handling means 21, e.g. a handle, realized on the extraction edge of the cage 11 and configured to facilitate the extraction and insertion of the cage 11 through the housing space 7.

The operation of the above described work vehicle 1 comprising a solar panel assembly 5 according to the present invention is the following.

In a first working condition of the work vehicle 1, i.e. a standard working condition, the solar panel 10 is arranged in the housing space 7 in its first configuration, i.e. totally beneath the central portion 6c of the support structure 6 and under the protective net 20. Therefore, it any object that could damage the solar panel 10 will fall towards this latter, it will be blocked by the central portion 6c or the protective net 20. However, due to the high presence of openings in the central portion 6c or the protective net 20, a sufficient quantity of light continuously impacts in the solar panel 10, thereby allowing its use. Clearly, in such condition, the solar panel 10 is locked with respect to support structure 6 via locking means.

In a second working condition of the work vehicle 1, i.e. a rest condition, the driver can unlock the solar panel 10 with respect to the protective structure 6 and extract this latter with respect to the housing space 7 by pulling from handling means 21. Accordingly, the cage 11 will slide thanks to sliding means till reaching the second end position. Then, the user can rotate the cage about the axis A defined by the roller 13 thereby allowing a more comfortable positioning of the solar panel 10 and, at the same time, to allow possible dust to slide by gravity from the solar panel 10. Accordingly, the solar panel 10 can be easily and fast cleaned by the driver.

When cleaned, the driver simply rotates the cage about axis A so that the cage 11 is positioned parallel with respect to roof 4 and then pushes the cage inside the housing space 7. Then, the solar panel 10 can be locked again with respect to support structure 6 and the driver can use the work vehicle for other operation with a totally cleaned solar panel.

In view of the foregoing, the advantages of a work vehicle comprising a solar panel assembly according to the invention are apparent.

Thanks to the proposed solar panel assembly 5, it is possible to mount a solar panel onto a work vehicle, thereby allowing the generation of clean energy that can be used to feed some elements or the battery of the vehicle. Therefore, the fuel consumption of the work vehicle can be reduced.

Furthermore, the use of a modified FOPS in combination with a protective net 20 allows to avoid the impact of elements which could damage the solar panel 10 while at the same time allowing a good irradiation of the solar panel 10.

Moreover, thanks to the extraction of the panel realized by the sliding means 12 and the fact that, when extracted, the solar panel 10 can be rotated, it is possible to easily clean the entire surface of the solar panel 10 by the dust.

According to the preceding, the solar panel assembly 5 can be used in a particularly dusty environment and will protect the solar panel assembly for rock, debris or rubble which are usually present in earthmoving vehicles.

Moreover, it is clear from the above that the solar panel assembly 5 can be easily mounted into already existing work vehicle by substituting the current FOPS with a solar panel assembly 5 according to the present invention, such as a kit.

It is clear that modifications can be made to the described work vehicle comprising a solar panel assembly which do not extend beyond the scope of protection defined by the claims. For example, it is clear that the shape of the support structure/FOPS 6 can be modified according to the typology of the work vehicle 1.

Moreover, the dimensions of openings of protective net 20 and of the central portion 6c of the support structure 6 can be varied according to the dimensions of the work vehicle 1 and the use to which it is destined.

Clearly, the sliding means 12, the stop means, the handling means 21 or the locking means may be realized according to the particular necessity of the geometry of the solar panel assembly 5 and as known in the art.

## Claims

1. Solar panel assembly (5) for a work vehicle (1), said solar panel assembly (5) comprising:
- a support structure (6) dimensioned to extend above at least a portion of a wall (3, 4) of said work vehicle (1) and comprising a fixation portion (6a), a distancing portion (6b) and a central portion (6c) each connected the one with the other, sad fixation portion (6a) being configured to be fixed to a wall (3, 4) of said work vehicle (1), said distancing portion (6b) being configured to distance said central portion (6c) with respect to said fixation portion (6a) and said wall (3, 4) of said work vehicle (1), said central portion (6c) being provided with a support grid defining a plurality of openings;
- a solar panel (10) arranged under said central portion (6c) and carried in a movable manner by said support structure (6) so that it can assume a first configuration into which it is completely covered under said central portion (6c) and a second configuration into which it is, at least partially, not covered by said central portion (6c); and
- a net (20) interposed between said solar panel (10) and said support structure (6) and carried by one between these latter.

2. Solar panel assembly according to claim 1, wherein said support structure (6) is a Falling Object Protective Structure .

3. Solar panel assembly according to claim 1 or 2, wherein said net (20) defines a plurality of openings, said openings being smaller than the openings of said central portion (6c).

4. Solar panel assembly according to any of the preceding claims, further comprising sliding means (12) configured to allow a sliding of said solar panel (10) with respect to said support structure (6) to allow to pass between said first and second configurations.

5. Solar panel assembly according to any of the preceding claims, further comprising rotation means configured to allow the rotation of said solar panel (10) with respect to said support structure (6) when arranged in said second configurations.

6. Solar panel assembly according to claim 4 or 5, wherein said sliding means (12) comprise a roller (13) carried by one between the solar panel (10) and the support structure (6) and a guide (14) realized in the other between these latter.

7. Solar panel assembly according to any of claims 4 to 6, further comprising stop means configured to define a first and a second end position for an edge of said solar panel (10) with respect to said structure (6).

8. Solar panel assembly according to claim 7 when depending to claim 6, wherein said stop means comprises a plate (15) configured to be fixed to said structure (6) and defining an impact surface for said roller (13).

9. Solar panel assembly according to any of the preceding claims, comprising locking means configured to selectively lock said solar panel in said first configuration.

10. Solar panel assembly according to claim 6 or 8, wherein said roller (13) is carried in a rotational free manner on a pin (17), said pin (17) extending from an edge of said solar panel (10) perpendicularly with respect to the sliding direction of said solar panel (10), said pin (17) being carried in a rotational free manner by said solar panel (10) so that, when this latter is in said second configuration, it allows the rotation of said solar panel (10) with respect to said support structure (6).

11. Solar panel assembly according to any of the preceding claim, wherein said solar panel (10) is arranged in a cage (11) which is carried by said support structure (6).

12. Solar panel assembly according to any of the preceding claim, wherein said solar panel (10) comprises handling means (21).

13. Work vehicle (1) comprising a plurality of walls (3, 4) configured to define a cab (2) or surrounding parts of a body of such work vehicle (1), said work vehicle (1) comprising a solar panel assembly (5) according to any of the preceding claims fixed to at least one of said plurality of walls (3, 4) .

## Patentansprüche

1. Solarpanelanordnung (5) für ein Arbeitsfahrzeug (1), wobei die Solarpanelanordnung (5) aufweist:
eine Trägerstruktur (6), die derart dimensioniert ist, dass sie sich über mindestens einen Abschnitt einer Wand (3, 4) des Arbeitsfahrzeugs (1) erstreckt, und die einen Befestigungsabschnitt (6a), einen distanzierenden Abschnitt (6b) und einen zentralen Abschnitt (6c) aufweist, die jeweils miteinander verbunden sind, wobei der Befestigungsabschnitt (6a) dazu eingerichtet ist, an eine Wand (3, 4) des Arbeitsfahrzeugs (1) befestigt zu werden, wobei der distanzierende Abschnitt (6b) dazu eingerichtet ist, den zentralen Abschnitt (6c) bezüglich des Befestigungsabschnitts (6a) und der Wand (3, 4) des Arbeitsfahrzeugs (1) zu distanzieren, wobei der zentrale Abschnitt (6c) mit einem Trägerrost versehen ist, der eine Mehrzahl von Öffnungen definiert;
ein Solarpanel (10), das unter dem zentralen Abschnitt (6c) angeordnet ist und das auf eine bewegbare Weise von der Trägerstruktur (6) getragen wird, so dass es eine erste Stellung, in der es vollständig von dem zentralen Abschnitt (6c) bedeckt ist, und eine zweite Stellung annehmen kann, in der es mindestens teilweise nicht von dem zentralen Abschnitt (6c) bedeckt ist; und
ein Netz (20), das zwischen dem Solarpanel (10) und der Trägerstruktur (6) eingefügt ist und das von einem der Letzteren getragen wird.

2. Solarpanelanordnung nach Anspruch 1, wobei die Trägerstruktur (6) eine Schutzvorrichtung für herabfallende Gegenstände (Falling Object Protective Structure) ist.

3. Solarpanelanordnung nach Anspruch 1 oder 2, wobei das Netz (20) eine Mehrzahl von Öffnungen definiert, wobei die Öffnungen kleiner als die Öffnungen des zentralen Abschnitts (6c) sind.

4. Solarpanelanordnung nach einem der vorherigen Ansprüche, die des Weiteren eine Gleiteinrichtung (12) aufweist, die dazu eingerichtet ist, ein Gleiten des Solarpanels (10) bezüglich der Trägerstruktur (6) zu ermöglichen, um einen Übergang zwischen der ersten und der zweiten Stellung zu ermöglichen.

5. Solarpanelanordnung nach einem der vorherigen Ansprüche, die des Weiteren ein Rotationsmittel aufweist, das dazu eingerichtet ist, die Drehung des Solarpanels (10) bezüglich der Trägerstruktur (6), bei Anordnung in der zweiten Stellung, zu ermöglichen.

6. Solarpanelanordnung nach Anspruch 4 oder 5, wobei die Gleiteinrichtung (12) eine Laufrolle (13), die von einem der beiden Elemente Solarpanel (10) und Trägerstruktur (6) getragen wird, und eine Führungseinrichtung (14) aufweist, die in dem anderen Element aus diesen realisiert ist.

7. Solarpanelanordnung nach einem der Ansprüche 4 bis 6, die des Weiteren Anschlagmittel aufweist, die dazu eingerichtet sind, eine erste und eine zweite Endstellung für einen Rand des Solarpanels (10) bezüglich der Struktur (6) zu definieren.

8. Solarpanelanordnung nach Anspruch 7, wenn abhängig von Anspruch 6, wobei die Anschlagmittel eine Platte (15) aufweisen, die dazu eingerichtet ist, um an der Struktur (6) befestigt zu sein und die eine Anschlagfläche für die Laufrolle (13) definiert.

9. Solarpanelanordnung nach einem der vorherigen Ansprüche, die eine Verriegelungseinrichtung aufweist, die dazu eingerichtet ist, das Solarpanel wahlweise in der ersten Stellung zu verriegeln.

10. Solarpanelanordnung nach Anspruch 6 oder 8, wobei die Laufrolle (13) in einer rotationsfreien Weise von einem Bolzen (17) getragen wird, wobei der Bolzen (17) sich von einem Rand des Solarpanels (10) im rechten Winkel bezüglich der Gleitrichtung des Solarpanels (10) erstreckt, wobei der Bolzen (17) in einer rotationsfreien Weise von dem Solarpanel (10) getragen wird, so dass, wenn das letztere in der zweiten Stellung ist, dieser eine Drehung des Solarpanels (10) bezüglich der Trägerstruktur (6) ermöglicht.

11. Solarpanelanordnung nach einem der vorherigen Ansprüche, wobei das Solarpanel (10) in einem Gehäuse (11) angeordnet ist, das von der Trägerstruktur (6) getragen wird.

12. Solarpanelanordnung nach einem der vorherigen Ansprüche, wobei das Solarpanel (10) ein Handhabungsmittel (21) aufweist.

13. Arbeitsfahrzeug (1), das eine Mehrzahl von Wänden (3, 4) aufweist, die dazu eingerichtet sind, ein Fahrerhaus (2) oder umliegende Teile einer Karosserie eines Arbeitsfahrzeugs (1) zu definieren, wobei das Arbeitsfahrzeug (1) eine Solarpanelanordnung (5) nach einem der vorherigen Ansprüche aufweist, die an mindestens einer der Mehrzahl von Wänden (3, 4) befestigt ist.

## Revendications

1. Ensemble de panneaux solaires (5) pour un véhicule de travail (1), ledit ensemble de panneaux solaires (5) comprenant :
- une structure de support (6) dimensionnée pour s'étendre au-dessus d'au moins une partie d'une paroi (3, 4) dudit véhicule de travail (1) et comprenant une partie de fixation (6a), une partie de distanciation (6b) et une partie centrale (6c) chacune reliée l'une à l'autre, ladite partie de fixation (6a) étant configurée pour être fixée à une paroi (3, 4) dudit véhicule de travail (1), ladite partie de distanciation (6b) étant configurée pour espacer ladite partie centrale (6c) par rapport à ladite partie de fixation (6a) et à ladite paroi (3, 4) dudit véhicule de travail (1), ladite partie centrale (6c) étant fournie avec une grille de support définissant une pluralité d'ouvertures ;
- un panneau solaire (10) disposé sous ladite partie centrale (6c) et porté d'une manière mobile par ladite structure de support (6) de sorte qu'il peut assumer une première configuration dans laquelle il est complètement couvert sous ladite partie centrale (6c) et une seconde configuration dans laquelle il n'est, au moins partiellement, pas couvert par ladite partie centrale (6c) ; et
- un filet (20) interposé entre ledit panneau solaire (10) et ladite structure de support (6) et porté par l'un de ces derniers.

2. Ensemble de panneaux solaires selon la revendication 1, dans lequel ladite structure de support (6) est une structure de protection contre le risque de chutes d'objets.

3. Ensemble de panneaux solaires selon la revendication 1 ou 2, dans lequel ledit filet (20) définit une pluralité d'ouvertures, lesdites ouvertures étant plus petites que les ouvertures de ladite partie centrale (6c).

4. Ensemble de panneaux solaires selon l'une quelconque des revendications précédentes, comprenant en outre des moyens coulissants (12) configurés pour permettre un glissement dudit panneau solaire (10) par rapport à ladite structure de support (6) pour permettre le passage entre lesdites première et seconde configurations.

5. Ensemble de panneaux solaires selon l'une quelconque des revendications précédentes, comprenant en outre des moyens de rotation configurés pour permettre la rotation dudit panneau solaire (10) par rapport à ladite structure de support (6) lorsqu'il est disposé dans ladite seconde configuration.

6. Ensemble de panneaux solaires selon la revendication 4 ou 5, dans lequel lesdits moyens coulissants (12) comprennent un rouleau (13) porté par l'un des éléments parmi le panneau solaire (10) et la structure de support (6) et un guide (14) réalisé dans l'autre parmi ces derniers.

7. Ensemble de panneaux solaires selon l'une quelconque des revendications 4 à 6, comprenant en outre des moyens d'arrêt configurés pour définir une première et une seconde position d'extrémité pour un bord dudit panneau solaire (10) par rapport à ladite structure (6).

8. Ensemble de panneaux solaires selon la revendication 7 lorsqu'elle est dépendante de la revendication 6, dans lequel lesdits moyens d'arrêt comprennent un plateau (15) configuré pour être fixé à ladite structure (6) et définissant une surface d'impact pour ledit rouleau (13).

9. Ensemble de panneaux solaires selon l'une quelconque des revendications précédentes, comprenant des moyens de verrouillage configurés pour verrouiller sélectivement ledit panneau solaire dans ladite première configuration.

10. Ensemble de panneaux solaires selon la revendication 6 ou 8, dans lequel ledit rouleau (13) est porté sans rotation sur une goupille (17), ladite goupille (17) s'étendant perpendiculairement d'un bord dudit panneau solaire (10) par rapport à la direction coulissante dudit panneau solaire (10), ladite goupille (17) étant portée sans rotation par ledit panneau solaire (10) de sorte que, lorsque ce dernier se trouve dans la seconde configuration, cela permet la rotation dudit panneau solaire (10) par rapport à ladite structure de support (6).

11. Ensemble de panneaux solaires selon l'une quelconque des revendications précédentes, dans lequel ledit panneau solaire (10) est disposé dans une cage (11) qui est portée par ladite structure de support.

12. Ensemble de panneaux solaires selon l'une quelconque des revendications précédentes, dans lequel ledit panneau solaire (10) comprend des moyens de gestion (21).

13. Véhicule de travail (1) comprenant une pluralité de parois (3, 4) configurées pour définir une cabine (2) ou des parties environnantes d'un corps d'un tel véhicule de travail (1), ledit véhicule de travail (1) comprenant un ensemble de panneaux solaires (5) selon l'une quelconque des revendications précédentes fixé à au moins une de ladite pluralité de parois (3, 4).
